# EUROPEAN PATENT APPLICATION

(11) **EP 4 804 504 A1**
(43) Date of publication of application: **09.09.2026**
(21) Application number: 24897152.5
(22) Date of filing: 23.10.2024
(51) Int. Cl.: H04M 1/72412, H04M 11/00, H04W 4/30, H04W 84/10

(54) **INFORMATION PROCESSING PROGRAM, TERMINAL DEVICE, INFORMATION PROCESSING METHOD, SERVER, ROTARY MACHINE, WIRELESS COMMUNICATION BOARD, AND INFORMATION PROCESSING SYSTEM**

(30) Priority: 30.11.2023 JP 2023202891
(71) Applicant: EBARA CORPORATION, Ota-ku, Tokyo 144-8510 (JP)
(72) Inventor: SAKAMAKI, Yuta, Tokyo 144-8510 (JP); YAMADA, Yasumasa, Tokyo 144-8510 (JP); SEKIGUCHI, Takashi, Tokyo 144-8510 (JP); PARK, Hyunwoo, Tokyo 144-8510 (JP)
(74) Representative: Wagner & Geyer
(86) International application number: PCT/JP2024/037652
(87) International publication number: WO 2025/115462

(57) **Abstract**

Facilitate identification of a communication target.

Provided is an information processing program for causing a terminal device to function as: a first means to receive identification information for identifying a wireless communication board by wireless communication with the wireless communication board mounted on a rotating machine; a second means to transmit the identification information to a server that is accessible to a storage unit in which the identification information and rotating machine information are stored in association with each other; a third means to receive, from the server, rotating machine information associated with the identification information; and a fourth means to display the received rotating machine information on a display.

## Description

### Technical Field

The present invention relates to an information processing program, a terminal device, an information processing method, a server, a rotating machine, a wireless communication board, and an information processing system.

### Background Art

A technique is known in which the operating state of a pump is checked by a smartphone using NFC communication (for example, Non-Patent Literature 1).

### Citation List

### Non-Patent Literature

Non-Patent Literature 1: https://www.ebara.co.jp/corporate/newsroom/release/products /detail/1190354_1685.html

### Summary of Invention

### Technical Problem

When there are a plurality of pumps, it is necessary to identify a pump that is a communication destination. This is not limited to cases where the communication target is a pump.

An object of the present invention is to facilitate identification of a communication target.

### Means for solving the problem

As examples, the following means for solving will be provided.
[1] An information processing program for causing a terminal device to function as:
   a first means to receive identification information for identifying a wireless communication board by wireless communication with the wireless communication board mounted on a rotating machine;
   a second means to transmit the identification information to a server that is accessible to a storage unit in which the identification information and rotating machine information are stored in association with each other;
   a third means to receive, from the server, rotating machine information associated with the identification information; and
   a fourth means to display the received rotating machine information on a display.
[2] The information processing program according to [1], wherein the rotating machine information is at least one of a serial number, equipment, an application, and an item number of the rotating machine.
[3] The information processing program according to [1] or [2], wherein the identification information is transmitted from the wireless communication board by one-way wireless communication prior to starting bidirectional wireless communication between the terminal device and the wireless communication board.
[4] The information processing program according to any one of [1] to [3], further causing the terminal device to function as:
   a fifth means to accept selection of a rotating machine corresponding to the rotating machine information displayed on the display; and
   a sixth means to start bidirectional wireless communication with the wireless communication board of the accepted rotating machine.
[5] The information processing program according to any one of [1] to [4]
   the first means receives control information in addition to the identification information, and
   the second means transmits the identification information to the server only when the control information satisfies a predetermined condition.
[6] The information processing program according to [5], wherein the control information indicates a manufacturer of the rotating machine.
[7] The information processing program according to any one of [1] to [6], wherein wireless communication between the terminal device and the wireless communication board conforms to a predetermined standard,
   in the predetermined standard, a transmittable data amount in one-way wireless communication prior to starting bidirectional wireless communication between the terminal device and the wireless communication board has an upper limit,
   a data amount of the identification information is smaller than the upper limit and is transmitted from the wireless communication board by the one-way wireless communication, and
   a data amount of the rotating machine information is larger than the upper limit.
[8] The information processing program according to any one of [1] to [7], wherein the rotating machine is a pump.
[9] The information processing program according to any one of [1] to [8], wherein the identification information is a MAC address.
[10] A terminal device comprising:
   a first means to receive identification information for identifying a wireless communication board by wireless communication with the wireless communication board mounted on a rotating machine;
   a second means to transmit the identification information to a server that is accessible to a storage unit in which the identification information and rotating machine information are stored in association with each other;
   a third means to receive, from the server, rotating machine information associated with the identification information; and
   a fourth means to display the received rotating machine information on a display.
[11] An information processing method comprising:
   by a terminal device, receiving identification information for identifying a wireless communication board by wireless communication with the wireless communication board mounted on a rotating machine;
   by the terminal device, transmitting the identification information to a server that is accessible to a storage unit in which the identification information and rotating machine information are stored in association with each other;
   by the terminal device, receiving, from the server, rotating machine information associated with the identification information; and
   by the terminal device, displaying the received rotating machine information on a display.
[12] An information processing program for causing a server to function as:
   a first means to receive, from a terminal device, identification information for identifying a wireless communication board mounted on a rotating machine;
   a second means to access a storage unit in which the identification information and rotating machine information are stored in association with each other to acquire rotating machine information associated with the identification information; and
   a third means to transmit the acquired rotating machine information to the terminal device.
[13] A server comprising:
   a first means to receive, from a terminal device, identification information for identifying a wireless communication board mounted on a rotating machine;
   a second means to access a storage unit in which the identification information and rotating machine information are stored in association with each other to acquire rotating machine information associated with the identification information; and
   a third means to transmit the acquired rotating machine information to the terminal device.
[14] An information processing method comprising:
   by a server, receiving, from a terminal device, identification information for identifying a wireless communication board mounted on a rotating machine;
   by the server, accessing a storage unit in which the identification information and rotating machine information are stored in association with each other to acquire rotating machine information associated with the identification information; and
   by the server, transmitting the acquired rotating machine information to the terminal device.
[15] A rotating machine that is capable of wireless communication with a terminal device and on which a wireless communication board is mounted,
   wherein the wireless communication board has a means to transmit, to the terminal device, identification information for identifying the wireless communication board and control information indicating a manufacturer of the rotating machine by one-way wireless communication prior to starting bidirectional wireless communication with the terminal device.
[16] A wireless communication board mounted on a rotating machine capable of wireless communication with a terminal device,
   wherein the wireless communication board comprises a means to transmit, to the terminal device, identification information for identifying the wireless communication board and control information indicating a manufacturer of the rotating machine by one-way wireless communication prior to starting bidirectional wireless communication with the terminal device.
[17] An information processing method comprises:
   by a wireless communication board mounted on a rotating machine capable of wireless communication with a terminal device, transmitting, to the terminal device, identification information for identifying the wireless communication board and control information indicating a manufacturer of the rotating machine by one-way wireless communication prior to starting bidirectional wireless communication with the terminal device.
[18] An information processing system comprising:
   the rotating machine according to [15];
   the terminal device according to [10]; and
   the server according to [13].
[19] An information processing method comprising:
   transmitting, by a wireless communication board mounted on a rotating machine, identification information for identifying the wireless communication board to a terminal device by wireless communication;
   receiving, by the terminal device, the identification information from the wireless communication board by wireless communication;
   transmitting, by the terminal device, the identification information to a server that is accessible to a storage unit in which the identification information and rotating machine information are stored in association with each other;
   receiving, by the server, the identification information from the terminal device;
   accessing, by the server, the storage unit to acquire rotating machine information associated with the identification information;
   transmitting, by the server, the acquired rotating machine information to the terminal device;
   receiving, by the terminal device, the rotating machine information from the server; and
   displaying, by the terminal device, the received rotating machine information on a display.

### Advantageous Effects of Invention

Identifying a communication target is facilitated.

### Brief Description of Drawings

FIG. 1 is a block diagram illustrating a schematic configuration of a pump control system according to a first embodiment.
FIGS. 2A and 2B are diagrams schematically illustrating screens displayed on a display 21.
FIG. 3 is a diagram illustrating information stored in a storage unit 33.
FIG. 4 is a sequence diagram illustrating an example of processing operations of the pump control system according to the first embodiment.
FIG. 5 is a sequence diagram illustrating an example of processing operations of a pump control system according to a second embodiment.

### Description of Embodiments

Hereinafter, embodiments of the present invention will be described in detail with reference to the drawings.

### (First Embodiment)

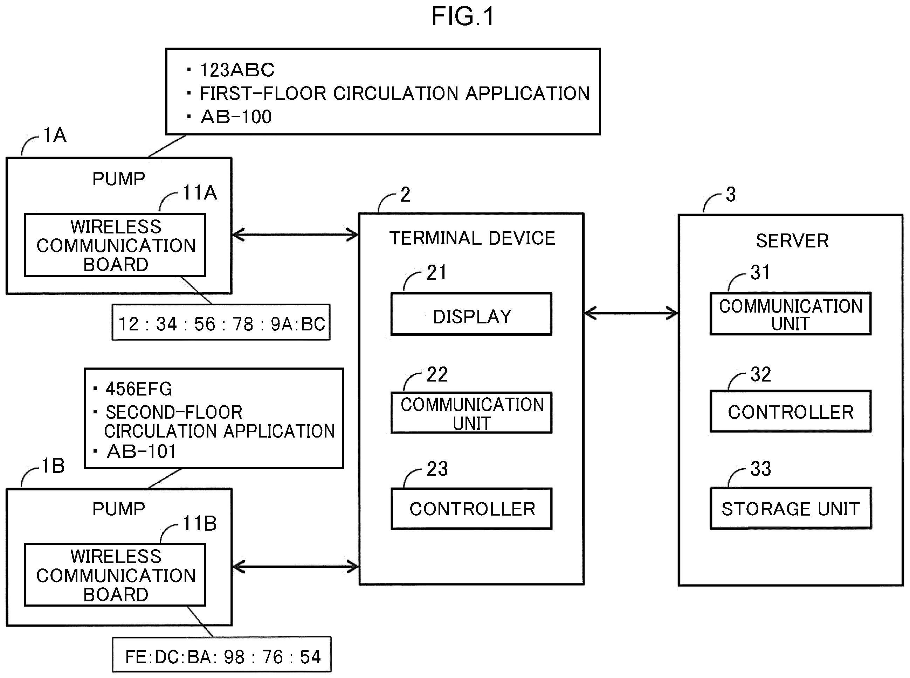

FIG. 1 is a block diagram illustrating a schematic configuration of a pump control system according to the first embodiment. The pump control system includes a plurality (two in the example of FIG. 1) of pumps 1A and 1B, a terminal device 2, and a server 3.

In pump 1A, by a user, a serial number "123ABC" is set, an equipment application "**first-floor circulation application**" is set, and an item number "AB-100" is set, and these are preferably printed on the main body of pump 1A. Further, the pump 1A is equipped with a wireless communication board 11A to which a MAC address "12:34:56:78:9A:BC" is assigned, and is capable of wireless communication with the terminal device 2 (hereinafter, wireless communication compliant with Bluetooth is assumed). Note that "equipped" means that the pump 1A may incorporate the wireless communication board 11A or the wireless communication board 11A may be externally attached to the pump 1A.

In pump 1B, by a user, a serial number "456EFG" is set, an equipment application "second-floor circulation application" is set, and an item number "AB-101" is set, and these are preferably printed on the main body of pump 1B. Further, pump 1B is equipped with a wireless communication board 11B to which a MAC address "FE:DC:BA:98:76:54" is assigned, and is capable of wireless communication with the terminal device 2 (hereinafter, wireless communication compliant with Bluetooth is assumed). Note that "equipped" means that the pump 1B may incorporate the wireless communication board 11B or the wireless communication board 11B may be externally attached to the pump 1B.

The terminal device 2 transmits control signals to the pumps 1A and 1B and receives predetermined data from the pumps 1A and 1B by wireless communication with the pumps 1A and 1B. The pumps 1A and 1B are often installed in locations that are difficult to access, such as being suspended from a ceiling or installed above a ceiling; however, by enabling wireless communication with the terminal device 2, management of the pumps 1A and 1B is facilitated.

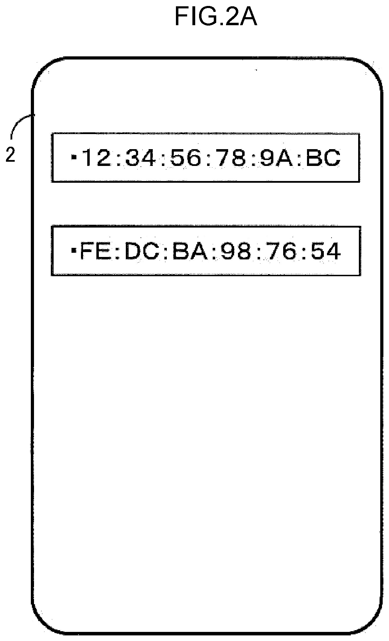

Here, the terminal device 2 is capable of communicating with a plurality of pumps 1A and 1B, and in order to start bidirectional communication, it is necessary to selectively display the pumps 1A and 1B as a communication destination on the terminal device 2. In Bluetooth, since MAC addresses of the wireless communication boards 11A and 11B serving as transmission sources are transmitted, it is conceivable to display the MAC addresses on the display 21 of the terminal device 2 (see FIG. 2A).

However, since MAC addresses are strings of alphanumeric characters automatically assigned, it is difficult for a user of the terminal device 2 to intuitively understand, by looking at the MAC addresses displayed on the terminal device 2, which of the pumps 1A and 1B the MAC addresses correspond to.

Therefore, it is also conceivable to transmit, by wireless communication, the serial numbers, equipment applications, or item numbers (for example, "first-floor circulation application" of pump 1A) set by the user for the pumps 1A and 1B to the terminal device 2 and display them on the display 21.

However, in wireless communication using Bluetooth, in one-way wireless communication (so-called advertising communication) in which data is transmitted without specifying a transmission destination prior to starting bidirectional communication, the amount of transmittable data is limited, and it is difficult to transmit serial numbers, equipment applications, or item numbers by such one-way communication.

Accordingly, in the present embodiment, the above problem is solved as follows.

The terminal device 2 in FIG. 1 is typically a smartphone and includes a display 21, a communication unit 22, and a controller 23. The display 21 displays pump information and the like to be described later in accordance with control by the controller 23. The communication unit 22 performs wireless communication with the pumps 1A and 1B by Bluetooth and performs Internet communication with the server 3. The controller 23 performs processing to be described later, for example, by a processor executing a predetermined program.

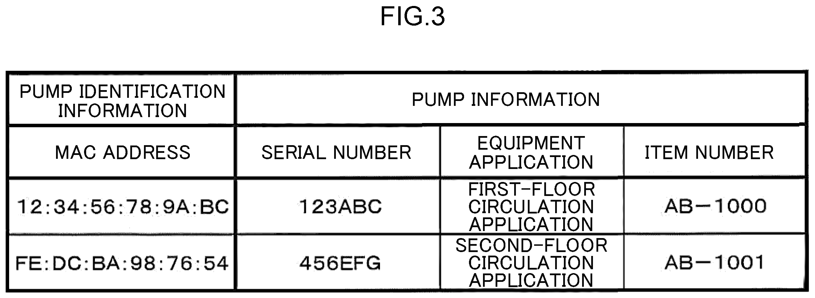

The server 3 includes a communication unit 31, a controller 32, and a storage unit 33. The communication unit 31 performs Internet communication with the terminal device 2. The controller 32 performs processing to be described later, for example, by a processor executing a predetermined program. As illustrated in FIG. 3, the storage unit 33 stores pump identification information and pump information in association with each other at the time of shipment of the pumps 1A and 1B.

The pump identification information may be MAC addresses of the wireless communication boards 11A and 11B included in the pumps 1A and 1B, respectively. The pump information may be serial numbers, equipment applications (equipment and application may be separate), or item numbers. The pump information may also be referred to as management names set by a user.

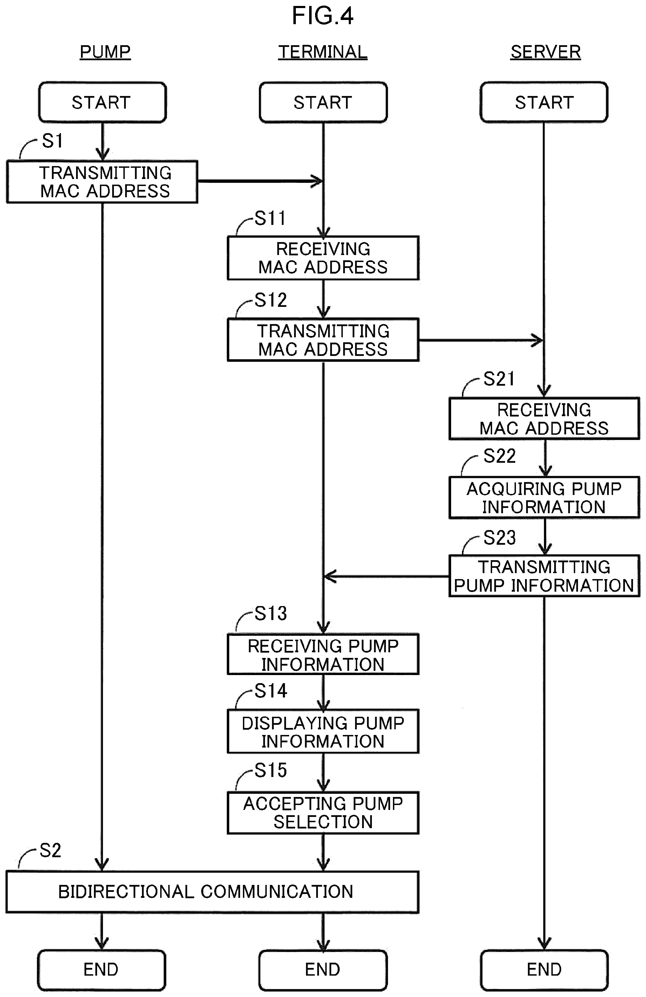

FIG. 4 is a sequence diagram illustrating an example of processing operations of the pump control system according to the first embodiment.

By periodic (for example, every one second) one-way wireless communication (advertising communication) prior to starting bidirectional wireless communication with the terminal device 2, the wireless communication board 11A of the pump 1A transmits, without specifying a transmission destination, the MAC address "12:34:56:78:9A:BC", which is an identification information of the wireless communication board 11A. Similarly, by periodic one-way wireless communication prior to starting bidirectional wireless communication with the terminal device 2, the wireless communication board 11B of the pump 1B transmits, without specifying a transmission destination, the MAC address "FE:DC:BA:98:76:54", which is an identification information of the wireless communication board 11B (step S1).

The data amount of a MAC address is not so large and is smaller than an upper limit of a data amount transmittable by advertising communication.

The communication unit 22 of the terminal device 2 receives the MAC address "12:34:56:78:9A:BC" from the wireless communication board 11A and receives the MAC address "FE:DC:BA:98:76:54" from the wireless communication board 11B (step S11). The communication unit 22 then transmits the MAC addresses "12:34:56:78:9A:BC" and "FE:DC:BA:98:76:54" to the server 3 (step S12).

The communication unit 31 of the server 3 receives the MAC addresses "12:34:56:78:9A:BC" and "FE:DC:BA:98:76:54" from the terminal device 2 (step S21). The controller 32 of the server 3 accesses the storage unit 33 (FIG. 3) to acquire pump information associated with the MAC addresses "12:34:56:78:9A:BC" and "FE:DC:BA:98:76:54" (step S22). The controller 32 may acquire all of a serial number, an equipment application, and an item number as the pump information, or may acquire only a part preset by a user. The communication unit 31 then transmits the acquired pump information to the terminal device 2 (step S23).

A data amount transmittable from the server 3 to the terminal device 2 is significantly larger than the upper limit of a data amount transmittable by advertising communication. Therefore, even if a data amount of the pump information is larger than the upper limit of the data amount transmittable by advertising communication, transmission from the server 3 to the terminal device 2 can be readily performed.

The communication unit 22 of the terminal device 2 receives pump information from the server 3 (step S13). Then, the controller 23 causes the pump information to be displayed on the display 21 (step S14).

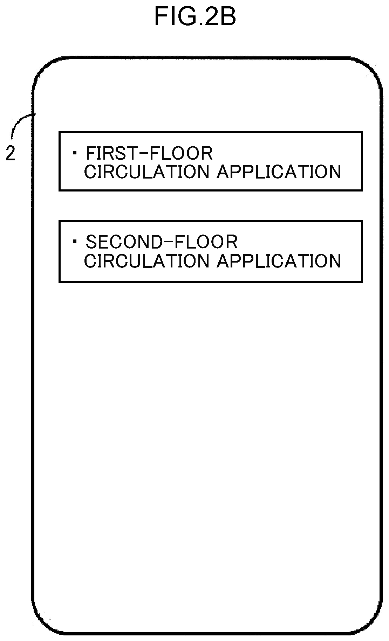

An example of a displayed screen is schematically illustrated in FIG. 2B. In the example of the figure, an equipment application is displayed as the pump information. As is apparent from a comparison between FIGS. 2A and 2B, when MAC addresses are displayed as in FIG. 2A, it is difficult to understand which of the pumps 1A and 1B is indicated, whereas by displaying pump information set by a user as in FIG. 2B, the user can intuitively recognize which of the pumps 1A and 1B is indicated.

Then, the user selects, using the terminal device 2, which of the pumps 1A and 1B to communicate with. As an example, the user selects one of the pumps 1A and 1B displayed on the display 21 via a touch panel (not shown). In other words, the controller 23 of the terminal device 2 accepts, from the user, selection of one of the pumps 1A and 1B corresponding to the pump information displayed on the display 21 (step S15 in FIG. 4).

For example, when the pump 1A is selected, the communication unit 22 of the terminal device 2 establishes bidirectional communication with the wireless communication board 11A of the pump 1A and starts communication (step S2).

As described above, in the present embodiment, pump information is displayed on the display 21 of the terminal device 2 instead of MAC addresses. Therefore, the user can intuitively recognize the pumps 1A and 1B corresponding to the displayed pump information.

The wireless communication boards 11A and 11B may be replaced due to failure or the like. In such a case, the MAC address of the wireless communication board after replacement can be registered as pump identification information in the storage unit 33 of the server 3.

### (Second Embodiment)

In a second embodiment described below, control information is transmitted from the wireless communication boards 11A and 11B in addition to MAC addresses. In the following description, common points with the first embodiment will be omitted or simplified, and differences will be mainly described.

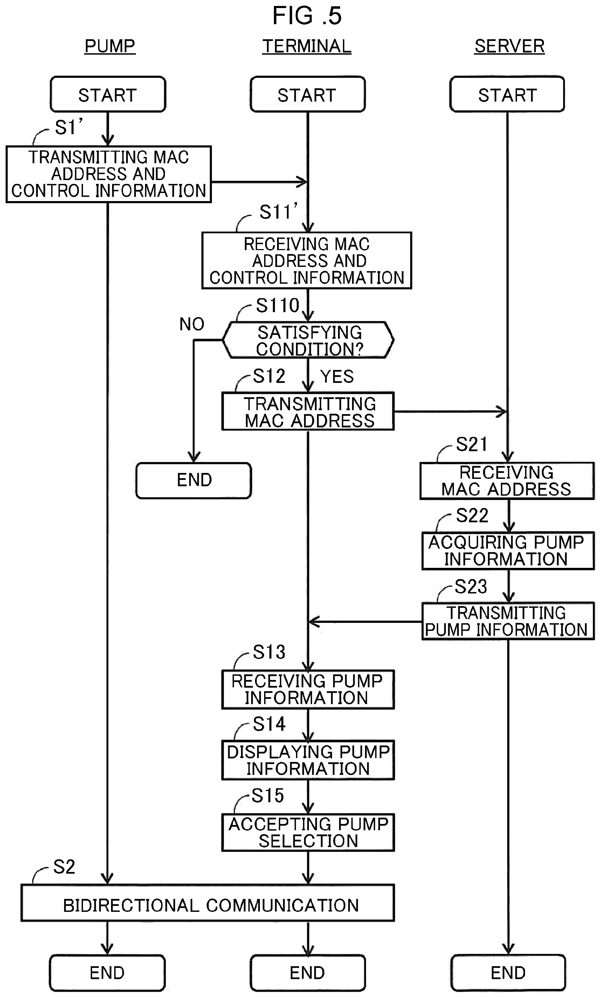

FIG. 5 is a sequence diagram illustrating an example of processing operations of a pump control system according to the second embodiment.

By one-way wireless communication (advertising communication) prior to starting bidirectional wireless communication with the terminal device 2, the wireless communication board 11A of the pump 1A transmits, to the terminal device 2, control information in addition to the MAC address "12:34:56:78:9A:BC." Similarly, by one-way wireless communication prior to starting bidirectional wireless communication with the terminal device 2, the wireless communication board 11B of the pump 1B transmits, to the terminal device 2, control information in addition to the MAC address "FE:DC:BA:98:76:54" (step S1').

The data amount of the control information is not so large, and even when the MAC address and the control information are combined, the data amount is smaller than the upper limit of a data amount transmittable by advertising communication.

The communication unit 22 of the terminal device 2 receives the MAC address "12:34:56:78:9A:BC" and the control information from the wireless communication board 11A (step S11'). The controller 23 then determines whether the control information satisfies a predetermined condition (step S110). Only when the condition is satisfied (YES in step S110), the communication unit 22 transmits the MAC address "12:34:56:78:9A:BC" to the server 3 (step S12).

Similarly, the communication unit 22 of the terminal device 2 receives the MAC address "FE:DC:BA:98:76:54" and the control information from the wireless communication board 11B (step S11'). The controller 23 then determines whether the control information satisfies the predetermined condition (step S110). Only when the condition is satisfied (YES in step S110), the controller 23 transmits the MAC address "FE:DC:BA:98:76:54" to the server 3 (step S12).

As an example, the control information indicates a manufacturer of the pumps 1A and 1B, and the predetermined condition is that the manufacturer of the pumps 1A and 1B is a manufacturer predetermined in advance. Subsequent processing is the same as that described in the first embodiment with reference to FIG. 4.

In the present embodiment, the MAC address is transmitted to the server 3 only when the control information satisfies the predetermined condition. Therefore, when the condition is not satisfied, the MAC address is not transmitted to the server 3, and communication traffic and processing load of the terminal device 2 can be reduced.

The MAC addresses in each of the embodiments described above are examples of identification information of the wireless communication boards 11A and 11B (in other words, identification information of the pumps 1A and 1B), and other identification information may be used. Further, each embodiment is applicable not only to the pumps 1A and 1B but also to arbitrary industrial equipment (for example, rotating machines having motors).

Any part or all of each functional unit described in the present specification may be realized by a program. The program described in the present specification may be distributed while being non-transitorily recorded on a computer-readable recording medium, may be distributed via a communication line such as the Internet (including wireless communication), or may be distributed in a state of being installed in an arbitrary terminal.

Based on the above description, those skilled in the art may conceive additional effects and various modifications of the present invention; however, embodiments of the present invention are not limited to the individual embodiments described above. For example, inventions obtained by extracting only a part of each embodiment or by combining a plurality of embodiments are also naturally conceivable. Various additions, changes, and partial deletions may be made without departing from the conceptual idea and spirit of the present invention derived from the matters defined in the claims and equivalents thereof.

For example, a single device (or component; the same applies hereinafter) described in the present specification (including one illustrated as a single device in the drawings) may be realized by a plurality of devices. Conversely, a plurality of devices described in the present specification (including those illustrated as a plurality of devices in the drawings) may be realized by a single device. Alternatively, a part or all of means or functions described as being included in one device (for example, a server) may be included in another device (for example, a terminal device). Further, a "system" may be constituted by a single device or by two or more devices (for example, a server and a terminal device, or a plurality of terminal devices).

Not all matters described in the present specification are essential requirements. In particular, matters described in the present specification but not described in the claims can be regarded as optional additional matters.

The term "means" in the present specification and the claims, unless otherwise specified, itself means hardware (or functions realized by hardware) and does not include humans (or human mental activities).

It should also be noted that the applicant merely knows prior art inventions described in the documents listed in the "Prior Art Documents" section of the present specification, and the present invention is not necessarily intended to solve problems in such prior art inventions. Problems to be solved by the present invention should be identified in consideration of the present specification as a whole. For example, when the present specification describes that a predetermined effect is achieved by a specific configuration, it can also be said that a problem opposite to the predetermined effect is solved; however, such a specific configuration is not necessarily intended to be an essential requirement.

### Description of sings

- 1A, 1B: pump
- 11A, 11B: wireless communication board
- 2: terminal device
- 21: display
- 22: communication unit
- 23: controller
- 3: server
- 31: communication unit
- 32: controller
- 33: storage unit

## Claims

1. An information processing program for causing a terminal device to function as:
a first means to receive identification information for identifying a wireless communication board by wireless communication with the wireless communication board mounted on a rotating machine;
a second means to transmit the identification information to a server that is accessible to a storage unit in which the identification information and rotating machine information are stored in association with each other;
a third means to receive, from the server, rotating machine information associated with the identification information; and
a fourth means to display the received rotating machine information on a display.

2. The information processing program according to claim 1, wherein the rotating machine information is at least one of a serial number, equipment, an application, and an item number of the rotating machine.

3. The information processing program according to claim 1 or 2, wherein the identification information is transmitted from the wireless communication board by one-way wireless communication prior to starting bidirectional wireless communication between the terminal device and the wireless communication board.

4. The information processing program according to claim 1 or 2, further causing the terminal device to function as:
a fifth means to accept selection of a rotating machine corresponding to the rotating machine information displayed on the display; and
a sixth means to start bidirectional wireless communication with the wireless communication board of the accepted rotating machine.

5. The information processing program according to claim 1 or 2, wherein
the first means receives control information in addition to the identification information, and
the second means transmits the identification information to the server only when the control information satisfies a predetermined condition.

6. The information processing program according to claim 5, wherein the control information indicates a manufacturer of the rotating machine.

7. The information processing program according to claim 1 or 2, wherein wireless communication between the terminal device and the wireless communication board conforms to a predetermined standard,
in the predetermined standard, a transmittable data amount in one-way wireless communication prior to starting bidirectional wireless communication between the terminal device and the wireless communication board has an upper limit,
a data amount of the identification information is smaller than the upper limit and is transmitted from the wireless communication board by the one-way wireless communication, and
a data amount of the rotating machine information is larger than the upper limit.

8. The information processing program according to claim 1 or 2, wherein the rotating machine is a pump.

9. The information processing program according to claim 1 or 2, wherein the identification information is a MAC address.

10. A terminal device comprising:
a first means to receive identification information for identifying a wireless communication board by wireless communication with the wireless communication board mounted on a rotating machine;
a second means to transmit the identification information to a server that is accessible to a storage unit in which the identification information and rotating machine information are stored in association with each other;
a third means to receive, from the server, rotating machine information associated with the identification information; and
a fourth means to display the received rotating machine information on a display.

11. An information processing method comprising:
by a terminal device, receiving identification information for identifying a wireless communication board by wireless communication with the wireless communication board mounted on a rotating machine;
by the terminal device, transmitting the identification information to a server that is accessible to a storage unit in which the identification information and rotating machine information are stored in association with each other;
by the terminal device, receiving, from the server, rotating machine information associated with the identification information; and
by the terminal device, displaying the received rotating machine information on a display.

12. An information processing program for causing a server to function as:
a first means to receive, from a terminal device, identification information for identifying a wireless communication board mounted on a rotating machine;
a second means to access a storage unit in which the identification information and rotating machine information are stored in association with each other to acquire rotating machine information associated with the identification information; and
a third means to transmit the acquired rotating machine information to the terminal device.

13. A server comprising:
a first means to receive, from a terminal device, identification information for identifying a wireless communication board mounted on a rotating machine;
a second means to access a storage unit in which the identification information and rotating machine information are stored in association with each other to acquire rotating machine information associated with the identification information; and
a third means to transmit the acquired rotating machine information to the terminal device.

14. An information processing method comprising:
by a server, receiving, from a terminal device, identification information for identifying a wireless communication board mounted on a rotating machine;
by the server, accessing a storage unit in which the identification information and rotating machine information are stored in association with each other to acquire rotating machine information associated with the identification information; and
by the server, transmitting the acquired rotating machine information to the terminal device.

15. A rotating machine that is capable of wireless communication with a terminal device and on which a wireless communication board is mounted,
wherein the wireless communication board has a means to transmit, to the terminal device, identification information for identifying the wireless communication board and control information indicating a manufacturer of the rotating machine by one-way wireless communication prior to starting bidirectional wireless communication with the terminal device.

16. A wireless communication board mounted on a rotating machine capable of wireless communication with a terminal device,
wherein the wireless communication board comprises a means to transmit, to the terminal device, identification information for identifying the wireless communication board and control information indicating a manufacturer of the rotating machine by one-way wireless communication prior to starting bidirectional wireless communication with the terminal device.

17. An information processing method comprises:
by a wireless communication board mounted on a rotating machine capable of wireless communication with a terminal device, transmitting, to the terminal device, identification information for identifying the wireless communication board and control information indicating a manufacturer of the rotating machine by one-way wireless communication prior to starting bidirectional wireless communication with the terminal device.

18. An information processing system comprising:
the rotating machine according to claim 15;
the terminal device according to claim 10; and
the server according to claim 13.

19. An information processing method comprising:
transmitting, by a wireless communication board mounted on a rotating machine, identification information for identifying the wireless communication board to a terminal device by wireless communication;
receiving, by the terminal device, the identification information from the wireless communication board by wireless communication;
transmitting, by the terminal device, the identification information to a server that is accessible to a storage unit in which the identification information and rotating machine information are stored in association with each other;
receiving, by the server, the identification information from the terminal device;
accessing, by the server, the storage unit to acquire rotating machine information associated with the identification information;
transmitting, by the server, the acquired rotating machine information to the terminal device;
receiving, by the terminal device, the rotating machine information from the server; and
displaying, by the terminal device, the received rotating machine information on a display.
